Europäisches Patentamt

European Patent Office

Office européen des brevets

(11) Veröffentlichungsnummer: **0 225 545**
**A1**

(12) # EUROPÄISCHE PATENTANMELDUNG

(21) Anmeldenummer: **86116427.5**

(22) Anmeldetag: **26.11.86**

(51) Int. Cl.4: **H02K 15/02** , **B23H 7/06**

(30) Priorität: **09.12.85 DE 3543482**

(43) Veröffentlichungstag der Anmeldung:
**16.06.87 Patentblatt 87/25**

(84) Benannte Vertragsstaaten:
**DE FR GB IT SE**

(71) Anmelder: **Siemens Aktiengesellschaft Berlin und München**
**Wittelsbacherplatz 2**
**D-8000 München 2(DE)**

(72) Erfinder: **Powilleit, Siegfried**
**Lindenstrasse 17**
**D-8501 Rosstal(DE)**

(54) **Verfahren und Vorrichtung zum Herstellen eines aus ferromagnetischem Band gewickelten und stirnseitig genuteten ringförmigen Aktivteils für eine elektrische Axialfeldmaschine.**

(57) Das mit härtbarem Kunstharz beschichtete Band wird nach dem Wickeln zu einem Ringwickel (1) verfestigt und aus dieser die stirnseitigen Nuten - (1A) elektroerosiv herausgeschnitten, wozu der Ringwickel in eine Halterung eingespannt wird, die durch in den einzelnen Raumkoordinaten motorisch angetriebene und unabhängig steuerbare Antriebsachsen gegen eine ortsfest stationierte steuerbare elektrische Drahtschneidevorrichtung (5 bis 8) verstellbar sind und der Ringwickel ständig elektrisch leitend mit der Stromversorgung für den Schneidedraht (5) gekoppelt (9) ist.

EP 0 225 545 A1

## Verfahren und Vorrichtung zum Herstellen eines aus ferromagnetischem Band gewickelten und stirnseitig genuteten ringförmigen Aktivteils für eine elektrische Axialfeldmaschine

Die Erfindung betrifft ein Verfahren zum Herstellen eines Aktivteils nach dem Oberbegriff des Anspruchs 1 sowie eine Vorrichtung zur Durchführung des Verfahrens.

Aus der DE-PS 700 879 ist es bekannt, das zu wickelnde ferromagnetische Band während des Wickelvorganges vor dem Ringwickel nacheinander mit einzelnen Randausschnitten zur Bildung von Nuten zu versehen (Ausstanzen), wozu die Wickelbewegung jeweils gestoppt werden muß, so daß keine ununterbrochene Wickelbewegung unter gleichbleibendem Zug möglich ist. Außerdem müssen die Abstände der einzelnen Randausschnitte voneinander mit Zunahme des Außendurchmessers des Ringwickels entsprechend vergrößert werden, damit sie die gewünschten Wickelnutabmessungen einhalten, was praktisch nicht genau erreichbar ist, so daß aufwendige Nachbearbeitungs-und Glättungsmaßnahmen in den Nuten erforderlich sind.

Eine Verbesserung gegenüber dem vorgenannten Stand der Technik ist mit dem im Oberbegriff berücksichtigten Verfahren nach der DE-AS 10 33 768 angestrebt, bei dem das als Schmier-und Isoliermittel auf das Band fortlaufend aufgetragene härtbare Kunstharz die einzelnen Schichten des genuteten Ringwickels zu einer festen Einheit verbindet. Das Einbringen der einzelnen Randausschnitte zur Bildung der besagten Nuten geschieht hierbei ebenfalls während des Wickelns, jedoch im Bereich des Ringwickels selbst. Es ist hierbei nicht mehr die genau bemessene Vergrößerung der Abstände der Randausschnitte erforderlich, da der Wickeldorn mit den aufgewickelten Bandschichten jeweils um eine gleiche Winkelteilung verstellt wird, damit das von innen nach außen durch Ausnehmungen im Wickeldorn geführte Stanzwerkzeug die jeweils äußere Bandschicht bearbeiten kann und dabei eine Entgratung der inneren Teilnutenwände bewirkt. Da aber auch hier kein ununterbrochener Wickelvorgang ablaufen kann, da während des Stanzens das Band samt Wickel zum Stillstand gebracht werden muß, ist eine gleichmäßige Lagendichte nicht möglich, zumal der Stanzvorgang selbst eine örtliche Verformung herbeiführt. Außerdem sind wegen der Abnutzung der Stanzwerkzeuge ausreichend glatte Innenwände der Nuten kaum erhältlich und darüberhinaus nur radial erstreckte Nuten anbringbar.

Der Erfindung liegt die Aufgabe zugrunde, einen Aktivteil der besagten Art herzustellen, der eine gleichmäßige Wickeldichte aufweist und ohne Nachbearbeitung glattwandige Nuten beliebiger Form und Lage aufweist.

Die Lösung der gestellten Aufgabe gelingt auf einfache Weise durch die kennzeichnenden Merkmale des Anspruchs 1 unter Verwendung einer Vorrichtung nach den kennzeichnenden Merkmalen des Anspruchs 2.

Das der axialen Länge des geforderten Ringwickels entsprechend breit bemessene ferromagnetische Band, gegebenenfalls mit Oberflächenisolierschicht, wird in an sich bekannter Weise von einer angetriebenen Abwickelhaspel in eine Schlaufenregelstrecke gefördert, aus der ein drehzahlregelbarer Wickeldorn das Band über eine Richt und/oder Brennstrecke durch eine Kunstharzbeschichtungsapparatur führt und das mit Kunstharz beschichtete Band unter stets gleichbleibender Zugkraft ununterbrochen aufwickelt bis der vom Durchmesser des Wickeldorn in seinem Innendurchmesser bestimmte Ringwickel die geforderten Außendurchmesser und damit eine bestimmte Höhe hat. Alsdann wird das Band abgeschnitten und der durch eine Vorrichtung zusammengehaltene fertige Ringwickel durch Aushärten des Kunstharzes unter Wärmeeinfluß zusammengebacken, so daß ein steifer Körper mit ausreichend glatten Stirnflächen vorliegt, was durch entsprechend bemessene Kunstharzmengen und gleichmäßigen Auftrag derselben auf das laufende ausgerichtete Band gewährleistet wird.

Der verfestigte Ringwickel wird danach mit den jeweils nach Zahl, Lage und Form benötigten Nuten versehen, indem diese elektroerosiv aus eine oder beiden Stirnseiten herausgeschnitten werden. Auf diese Weise können die Innenwände der Nuten ohne jegliche Nachbearbeitung glatt und ohne Grat hergestellt worden, so daß eine ansonsten notwendige Nachbearbeitung entfallen kann.

Zum elektroerosiven Herausschneiden der Nuten ohne Gefährdung der Lagenisolierung kann eine übliche Drahtschneideeinrichtung, bestehend aus einer Drahtführungsvorrichtung, einem elektrischen Generator zur Zuführung der elektrischen Impuls-Energie auf den Draht, einem kühlenden Spülsystem für den Draht und die Schnittstelle im Ringwickel sowie einer elektrischen CNC-Steuerung für den Drahtantrieb und die zugeführte Energie, verwendet werden.

Der verfertigte Ringwickel wird in eine Halterung eingespannt und diese nach der Nutform und Nutlage programmgesteuert in entsprechende Koordinatenrichtungen verstellt.

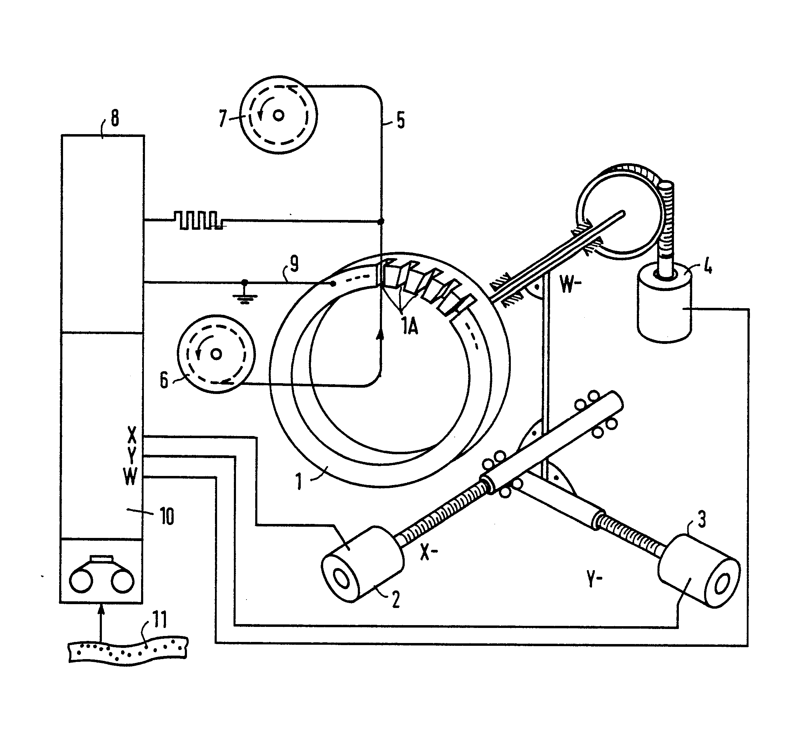

Ein Beispiel für eine solche Vorrichtung ist in der Zeichnung schematisch dargestellt und nachfolgend kurz erläutert.

Der Ringwickel 1 ist in üblicher Weise in eine nicht dargestellte Halterung eingespannt, für die drei senkrecht aufeinanderstehende Raumkoordinaten durch die X-Achse, Y-Achse und W-Achse angedeutet sind. Diese drei Achsen sind als sogenannte NC-Achsen mit jeweils eigenen Antriebsmotoren 2, 3 und 4 ausgebildet, die jeweils für sich und in gegenseitiger Abhängigkeit entsprechend der Nutenkonfiguration und Nutenlage programmsteuerbar sind und dementsprechend den Ringwickel 1 zum Ausschneiden von Nuten 1A gegen den Schneidedraht 5 verstellen, der dabei von einer Abwickelhaspel 6 auf eine Aufwickelhaspel 7 gespult wird. Der Schneidedraht 5 ist mit einer steuerbaren Stromquelle 8 gekoppelt, an die ebenfalls der Ringwickel 1 bei der Koppelstelle 9 gekoppelt ist. Die Antriebsmotoren 2, 3, 4 werden von einer Speise-und Steueranordnung 10 beeinflußt, die zusammen mit der Stromquelle 8 von Lochstreifen 11 gesteuert werden. Anstelle einer Lochstreifensteuerung kann auch eine andere bekannte Programmsteuerung treten.

## Ansprüche

1) Verfahren zum Herstellen eines stirnseitig genuteten Aktivteils für eine elektrische Axialfeldmaschine aus ringförmig gewickeltem ferromagnetischem Band, auf das während des Aufwickelns fortlaufend härtbares Kunstharz aufgetragen wird, das im ausgehärteten Zustand die einzelnen Schichten des Ringwickels zusammenhält,
**dadurch gekennzeichnet,**
daß aus dem durch das erhärtete Kunstharz zusammengebackenen Ringwickel die stirnseitigen Nuten elektroerosiv herausgeschnitten werden.

2) Vorrichtung zur Durchführung des Verfahrens nach Anspruch 1,
**dadurch gekennzeichnet,**
daß der verfestigte Ringwickel (1) in eine Halterung eingespannt wird, die in entsprechenden Raumkoordinaten durch diesen zugeordnete elektromotorisch angetriebene und jeweils für sich programmabhängig steuerbare Antriebs-Achsen (X, Y, W) entsprechend der jeweiligen Nutengeometrie relativ gegen eine ortsfest stationierte steuerbare elektrische Drahtschneidevorrichtung (5, 6, 7, 8) verstellbar ist, wobei der Ringwickel (1) ständig elektrisch leitend (9) mit der Stromversorgung (8) für den durchlaufend angetriebenen Schneidedraht (5) gekoppelt ist.

3) Vorrichtung nach Anspruch 2,
**dadurch gekennzeichnet,**
daß drei Antriebsachsen in Form von NC-Achsen für die Verstellung der Halterung vorgesehen sind.

## Europäisches Patentamt

## EUROPÄISCHER RECHERCHENBERICHT

Nummer der Anmeldung

EP 86 11 6427

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-A-1 488 754 (VYZKUMNY A VYVOJOVY USTAV ELEKTRICKYCH STROJU TOCIVYCH) <br> * Seite 2, Zeile 12 - Seite 3, Zeile 17; Figur 1 * | 1 | H 02 K 15/02 <br> B 23 H 7/06 |
| A | | 2,3 | |
| | --- | | |
| A | DE-A-3 023 436 (MITSUBISHI DENKI K.K.) <br> * Seite 3, Zeile 11 - Seite 4, Zeile 26; Figur 1 * | 2,3 | |
| | --- | | |
| A | EP-A-0 010 654 (BROWN BOVERI & CIE A.G.) <br> * Seite 3, Zeilen 12-24 * | 1 | |
| | --- | | RECHERCHIERTE SACHGEBIETE (Int. Cl.4) |
| A | DE-A-2 807 066 (SCHULER GmbH) <br> * Seite 5, Zeile 3 - Seite 6, Zeile 11; Figur 1 * | 1 | H 02 K 15/00 <br> B 23 H 7/00 |
| | ----- | | |

Der vorliegende Recherchenbericht wurde für alle Patentansprüche erstellt.

| Recherchenort | Abschlußdatum der Recherche | Prüfer |
|---|---|---|
| BERLIN | 13-02-1987 | WEIHS J.A. |